# EUROPÄISCHE PATENTANMELDUNG

(11) **EP 1 914 044 A1**
(43) Veröffentlichungstag der Anmeldung: **23.04.2008**
(21) Anmeldenummer: 06022017.5
(22) Anmeldetag: 20.10.2006
(51) Int. Cl.: B25J 9/16

(54) **System und Verfahren zur Steuerung einer Bewegungsvorrichtung**

(71) Anmelder: ABB RESEARCH LTD., 8050 Zürich (CH)
(72) Erfinder: Kock, Sönke, Dr.-Ing., 72463 Västeras (SE); Norlin, Per, 42353 Torslanda (SE)
(74) Vertreter: Miller, Toivo

(57) **Zusammenfassung**

Ein System zur Steuerung einer Bewegungsvorrichtung wird zur Verfügung gestellt. Das System enthält eine Bewegungsvorrichtung mit einem an der Bewegungsvorrichtung zur Verfügung gestellten Werkzeug (220), eine Bewegungsvorrichtungssteuerung (100,102) eine Sicherheitssteuerung (130), eine Werkzeug-Wartungsstation (120,210) und eine Bewegungserkennungseinheit für die Positionsberechnung der Bewegungsvorrichtung in der Sicherheitssteuerung. Das System enthält ein Positionsdetektionsmodul zur Generierung eines Signals (140) korrespondierend zu einer Positionierung des Werkzeugs (220) in der Werkzeug-Wartungsstation, das mit einer Übertragungseinheit für das Signal an die Sicherheitssteuerung zur Verfügung gestellt ist.
Die vom Positionsdetektionsmodul detektierte Position stellt gleichzeitig eine gültige Kalibrierposition der Bewegungsvorrichtung dar. Das generierte Signal (140) stoßt einen Kalibrierungs- bzw. Sicherheitsüberprüfungsprozeß an, der einen Vergleich der von der Sicherheitssteuerung berechneten Umdrehungszahl oder Position jeder Achse mit vorgespeicherten Werten sowie auschließende Bewertung der Abweichung in Bezug auf eine vorgegebene Toleranz beinhaltet.

## Beschreibung

Die Erfindung bezieht sich auf Bewegungsvorrichtungen und Bewegungsvorrichtungssteuerungen. Insbesondere bezieht sich die Erfindung auf Sicherheitseinrichtungen für Roboter und deren Steuerung. Im Speziellen bezieht sich in die Erfindung auf ein System zur Steuerung einer Bewegungsvorrichtung und ein Verfahren zur Steuerung einer Bewegungsvorrichtung mit einer Sicherheitssteuerung.

Roboter übernehmen im Rahmen industrieller Fertigung mehr und mehr Aufgaben. Hierbei werden Roboter zum einen verwendet, um Komponenten an einen vorbestimmten Ort zu positionieren. Zum anderen werden auch zunehmend Werkzeug-Roboter verwendet, die mit Schweißköpfen, Lackier-Düsen oder Laserschneidvorrichtungen ausgestattet sind. Dabei führen die Roboter mit den gegebenen Achsen vorprogrammierte Bewegungen durch. Der Bereich dieser Roboterbewegungen stellte für Personal, das den Bewegungsbereich betritt, ein erhebliches Sicherheitsrisiko dar. Es kann aber für Wartungsarbeiten, ein manuelles Führen des Roboters oder andere Tätigkeiten notwendig sein, in den Gefahrenbereich des Roboters einzutreten. Im Allgemeinen ist es für den Betrieb von Robotern vorgeschrieben, bestimmte Sicherheitsvoraussetzungen zu erfüllen.

Roboter werden hierzu z. B. mit Sicherheits-Positionsschaltern, Sicherheitssteuerung oder anderen Geräten ausgerüstet, die die Position eines Roboters überwachen.

Hierbei können Sicherheitssteuerungen die Information von Drehgebern (Winkelgebern) verarbeiten, um die Roboterposition zu bestimmen. Diese Drehgeber-Messungen werden am Getriebe motorseitig abgenommen und die Sicherheitssteuerung zählt die Umdrehungen des Motors, um die armseitige Position zu bestimmen. Auf der anderen Seite berechnet die Robotersteuerung die Umdrehungen mit einem ebenfalls motorseitig angeordneten Drehgeber und einem weiteren Umdrehungszähler. Häufig werden auch für beide Steuerungen der gleiche Geber, aber getrennte Umdrehungszähler verwendet. Zum sicheren Betrieb des Roboters ist es notwendig den Drehgeber der Sicherheitssteuerung und den Drehgeber der Robotersteuerung in gewissen, vorzugsweise regelmäßigen Abständen mit einem Positions- bzw. Umdrehungswert zu synchronisieren. Es wird dabei z.B. der Drehgeber der Sicherheitssteuerung auf seine korrekte Positionsberechnung überprüft, indem er mit einer derzeitigen Position synchronisiert wird. Die für dieses Sicherheitsmerkmal benötigte Zeit reduziert jedoch die Produktivität der Anlage, da die Zeit für die Synchronisation zu der Zykluszeit zugerechnet werden muss.

Ausgehend von dem zuvor Beschriebenen liegt der Erfindung die Aufgabe zu Grunde, verbesserte Systeme für Roboter, Robotersteuerungen und verbesserte Verfahren zur Robotersteuerung zur Verfügung zu stellen. Hierbei soll die Standzeit der Anlage ohne Vernachlässigung von Sicherheitsaspekten effektiver genutzt werden.

Diese Aufgabe wird durch ein System zur Steuerung eine Bewegungsvorrichtung gemäß Anspruch 1 und einem Verfahren zur Steuerung einer Bewegungsvorrichtung mit einer Sicherheitssteuerung gemäß Anspruch 10 gelöst. Vorteilhafte Ausgestaltungen, Merkmale, Aspekte und Details sind in weiteren Ansprüchen, in der Beschreibung und den Figuren angegeben.

Im Bezug auf das zuvor genannte wird ein System zur Steuerung einer Bewegungsvorrichtung bzw. eine Bewegungsvorrichtung (z.B. ein Roboter oder eine Bewegungsachse) mit einer Sicherheitssteuerung zur Verfügung gestellt. Diese beinhalten eine Bewegungsvorrichtung mit einem an der Bewegungsvorrichtung zur Verfügung gestellten Werkzeug, eine Bewegungsvorrichtungssteuerung, eine Sicherheitssteuerung, eine Werkzeug-Wartungsstation, wobei ein Positionsdetektionsmodul zur Generierung eines Signals korrespondierend zu einer Positionierung des Werkzeugs in der Werkzeug-Wartungsstation zur Verfügung gestellt ist, das ein Übertragungsmittel für das Signal an die Sicherheitssteuerung aufweist.

Durch eine solche Vorrichtung bzw. ein solches System kann eine notwenige oder erforderliche Synchronisation der Sicherheitssteuerung während von der Synchronisation der Sicherheitssteuerung unabhängigen Wartungsarbeiten durchgeführt werden. Dabei wird typischerweise ein durch eine Bewegungserkennungseinheit, z.B. ein Drehgeber, für die Positionsbestimmung erkannter Wert der Position der Bewegungsvorrichtung in der Sicherheitssteuerung mit einem Ist-Wert abgeglichen.

Gemäß einer Ausführungsform ist es möglich, dass die Übertragungseinheit des Positionsdetektionsmoduls ausgebildet ist, um das Signal aus einem Wartungssignal für die Bewegungsvorrichtung zu generieren. Gemäß einer anderen Ausführungsform weist das Positionsdetektionsmodul eine erste und zweite Positionsdetektionsmodul-Komponente auf, wobei die erste Positionsdetektionsmodul-Komponente ein Positionsdetektor ist und die zweite Positionsdetektionsmodul-Komponente ein den Positionsdetektor auslösendes Element ist.

Demgemäß kann ein Initiierungssignal für die Synchronisation aus einem von der Synchronisation unabhängigen Signal für die Wartung generiert werden oder es kann zusätzlich oder alternativ ein Mechanismus zur Detektion der Werkzeugposition in der Wartungsstation zur Verfügung gestellt werden.

Gemäß einer Ausführungsform kann ein Mechanismus zur Detektion der Werkzeugposition in der Wartungsstation derart aufgebaut sein, dass der Positionsdetektor ortsfest im Bezug auf die Werkzeug-Wartungsstation oder an der Werkzeug-Wartungsstation zur Verfügung gestellt ist, und wobei das den Positionsdetektor auslösende Element an der Bewegungsvorrichtung oder an dem Werkzeug zur Verfügung gestellt ist. Alternativ kann der Positionsdetektor an der Bewegungsvorrichtung oder an dem Werkzeug zur Verfügung gestellt sein, und das den Positionsdetektor auslösende Element ortsfest im Bezug auf die Werkzeug-Wartungsstation oder an der Werkzeug-Wartungsstation zur Verfügung gestellt sein.

Typischerweise kann der Positionsdetektor eine der folgenden Ausgestaltungen annehmen: ein Taster, ein Schalter, ein Näherungssensor, eine Lichtschranke, ein Entfernungsmesser, und/oder ein Licht-Detektor, beispielsweise eine Photozelle.

Gemäß weiteren Ausführungsformen kann die Übertragungseinheit für die Übertragung des Synchronisationssignals das Signal kabelgebunden oder drahtlos an die Sicherheitssteuerung übertragen. Im Rahmen der hierin beschriebenen Ausführungsformen ist die Bewegungsvorrichtung typischerweise ein Roboter.

Ferner wird, im Bezug auf das oben Genannte, ein Verfahren zur Steuerung einer Bewegungsvorrichtung mit einer Sicherheitssteuerung zur Verfügung gestellt. Das Verfahren umfasst das Bewegen der Bewegungsvorrichtung in eine Wartungsposition zum Warten eines Werkzeugs, das Übertragen eines Wartungssignals an eine Steuerkomponente der Bewegungsvorrichtung innerhalb eines Zeitraums vom Einnehmen der Wartungsposition bis zum Verlassen der Wartungsposition, das Übertragen eines Synchronisationssignals für eine Sicherheitssteuerung innerhalb des Zeitraums vom Einnehmen der Wartungsposition bis zum Verlassen der Wartungsposition, das Synchronisieren der Sicherheitssteuerung, und gegebenenfalls das Bewegen der Bewegungsvorrichtung von der Wartungsstation nach einem Signal für eine erfolgreiche Synchronisation.

Typischerweise kann gemäß unterschiedlichen Ausführungsformen ein Wartungssignal am Anfang und/oder am Ende des Zeitraums der Wartung bzw. zusätzlich oder alternativ während des Zeitraums der Wartung, das heißt zu einem beliebigen Zeitpunkt innerhalb des Wartungsintervalls, übertragen werden.

Gemäß einer weiteren Ausführungsform beinhaltet das Synchronisieren der Sicherheitssteuerung das Vergleichen der von der Sicherheitssteuerung registrierten Umdrehungszahl des Motors einer Achse mit einer tatsächlichen Umdrehungszahl des Motors der Achse, die anhand der vorgebbaren Position bestimmbar ist, und das Bewerten einer Abweichung im Bezug auf eine vorgegebene Toleranz.

Da das an der Bewegungsvorrichtung befestigte Werkzeug innerhalb des Zeitraums vom Einnehmen der Wartungsposition bis zum Verlassen der Wartungsposition gewartet werden kann, benötigt die Synchronisation der Sicherheitssteuerung keine zusätzliche Zeit.

Gemäß einer Ausführungsform kann das Synchronisationssignal aus dem Wartungssignal generiert werden. Gemäß einer anderen Ausführungsform kann zusätzlich oder alternativ das Synchronisationssignal durch einen Detektionsmechanismus generiert werden, der in der Wartungsposition und/oder durch Einnehmen der Wartungsposition aktiviert wird.

Gemäß einer noch weiteren Ausführungsform ist eine Zeit für einen Zyklus der Bewegungsvorrichtung inklusive Wartung des an der Bewegungsvorrichtung befestigten Werkzeugs nicht kleiner als eine Zeit für einen Zyklus der Bewegungsvorrichtung inklusive Wartung des an der Bewegungsvorrichtung befestigten Werkzeugs und der Synchronisation der Sicherheitssteuerung.

An Hand der in den folgenden Figuren dargestellten Ausführungsbeispiele sollen die Erfindung sowie vorteilhafte Ausgestaltungen, Verbesserungen und Details näher erläutert und beschrieben werden.

Es zeigen:
Fig. 1 zeigt eine schematische Darstellung der Anlagensteuerung während einer Synchronisation der Sicherheitssteuerung,
Fig. 2 zeigt eine schematische Darstellung einer Bewegungsvorrichtungssystemkomponente die im Rahmen einer Wartungsarbeit mit der Sicherheitssteuerung kommuniziert,
Fig. 2a zeigt eine schematische Darstellung einer Bewegungsvorrichtungssystemkomponente die im Rahmen einer Wartungsarbeit mit der Sicherheitssteuerung kommuniziert,
Fig. 3 zeigt eine schematische Darstellung einer Bewegungsvorrichtungssystemkomponente die im Rahmen einer Wartungsarbeit mit der Sicherheitssteuerung kommuniziert,
Fig. 4 zeigt eine schematische Darstellung einer Bewegungsvorrichtungssystemkomponente die im Rahmen einer Wartungsarbeit mit der Sicherheitssteuerung kommuniziert, und
Fig. 5 zeigt ein Flussdiagramm einer Ausführungsform für die Robotersteuerung.

Im Folgenden werden Ausführungsformen und Details der Erfindung im Bezug auf Roboter beschrieben. Die Ausführungsformen können jedoch für jede Form der Bewegungsvorrichtung, insbesondere Bewegungsvorrichtungen für Bearbeitungseinrichtungen, Verwendungen finden. Die Bewegungsvorrichtungen können Roboter aber auch Linearachsen oder andere Handhabungssysteme sein, die mit einer oder mehreren Achsen bewegt werden können.

Im Zusammenhang mit den hierin dargelegten Ausführungsformen wird auf Werkzeuge an einer Bewegungsvorrichtung, z.B. einem Roboter, Bezug genommen. Typische Werkzeuge die an einer Bewegungsvorrichtung montiert sind, sind Schweißköpfe für das Punktschweißen, Schweißbrenner für das Lichtbogenschweißen, Laserköpfe zum Schneiden, Schweißen und/oder Reinigen, Lackierdüsen, Greifer oder Hybridköpfe, die mehrere der oben genannten Werkzeuge kombinieren.

Vor allem bei der Verwendung von Werkzeugrobotem müssen die Werkzeuge des Roboters in regelmäßigen Abständen Wartungsarbeiten unterzogen werden. So gehört zum Beispiel das Formen der Spitze beim Punktschweißen, das Reinigen des Schweißbrenners beim Lichtbogenschweißen, das Reinigen des Laserkopfes beim Laserschweißen oder anderen Laserapplikationen, das Reinigen von Spritzdüsen oder andere Wartungsarbeiten von Werkzeugen an Werkzeugmaschinen zu den typischen Wartungsarbeiten. Auch Handhabungsroboter unterliegen Wartungszyklen für zum Beispiel die Handhabungseinheiten bzw. Greifer. Zur Wartung kann auch das Vermessen eines Werkzeugpunktes (Tool Center Point), zum Beispiel mit Hilfe eines optischen Sensors, gehören.

Im Rahmen von Wartungsarbeiten werden die Roboter zu einer Wartungsstation bewegt, so dass dort die entsprechenden Wartungsarbeiten durchgeführt werden können.

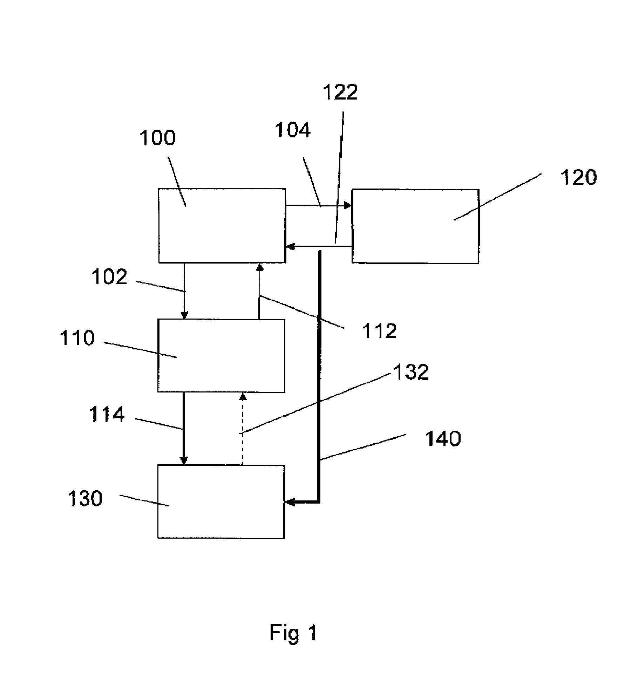

Fig. 1 zeigt eine schematische Darstellung einer Anordnung gemäß einer hierin beschriebenen Ausführungsform. Eine Speicherprogrammierbare Steuerung (SPS, Programmable Logic Controller (PLC)) 100 gibt der Robotersteuerung 110 ein Signal die Wartungsstation 120 anzusteuern. Die Robotersteuerung 110 übermittelt ein Signal 112 an die Speicherprogrammierbare Steuerung 100 wenn die Robotersteuerung den Roboterarm in Position in der Wartungsstation 120 gebracht hat. Die SPS signalisiert mittels des Signals 104, dass die Wartungsstation 120 die entsprechenden Wartungsarbeiten durchführen kann.

Gemäß verschiedener Ausführungsformen kann die Wartungsarbeit beispielsweise durch das Formen der Spitze beim Punktschweißen, das Reinigen des Schweißbrenners beim Lichtbogenschweißen, das Reinigen des Laserkopfes beim Laserschweißen oder anderen Laserapplikationen, oder das Reinigen von Spritzdüsen gegeben sein.

Gemäß der in Fig. 1 dargestellten Ausführungsform wird anhand des Servicesignals 122 der Servicestation 120 ein Signal 140 an die Sicherheitssteuerung 130 übertragen. Das Signal 140 signalisiert, dass eine Synchronisation der Sicherheitssteuerung durchgeführt werden kann. Gemäß einer Ausführungsform wird die Sicherheitssteuerung mit einem gespeicherten Positionswert, der durch eine vorbestimmte Position innerhalb der Wartungsstation definiert ist, synchronisiert.

Basierend auf der nun bekannten Ist-Position ist die Sicherheitssteuerung 130 in der Lage zu überprüfen, ob eine sicherheitsrelevante Abweichung zwischen der SollPosition und der von der Sicherheitssteuerung 130 berechneten Position auftritt.

Eine Synchronisation der Sicherheitssteuerung ist zum Beispiel auch nach dem Einschalten der Sicherheitssteuerung notwenig, um einen aktuellen Speicherwert, der mit der festen Wartungsposition abgeglichen ist, zu erzeugen.

Gemäß einer weiteren Ausführungsform, wie in Fig. 1 dargestellt, wird der von der Robotersteuerung berechnete Positionswert mittels des Positionssignals 114 von der Robotersteuerungen 110 an die Sicherheitssteuerung 130 übertragen. Dadurch kann zusätzliche eine Prüfung der Robotersteuerung stattfinden. Auch ist vorsehbar, dass der berechnete Positionswert mittels Positionssignal 114 als alternative Angabe der Ist-Position der Sicherheitssteuerung 130 übermittelt wird.

Im Rahmen der Sicherheitsüberwachung bestehen dann zwei sicherheitsrelevante Prüfungen. Erstens, ob der von der Sicherheitssteuerung berechnete Wert von der gespeicherten Ist-Position, in der sich das Werkzeug befindet, eine Abweichung aufweist. Falls eine Abweichung erkannt wird kann der Roboter für eine weitere Bewegung gesperrt werden. Zweitens, ob der von der Robotersteuerung berechnete Wert von der gespeicherten Ist-Position, in der sich das Werkzeug befindet, eine Abweichung aufweist. Falls nicht bereits durch eine Kollision des Roboters mit der Werkzeugstation oder ein fehlendes Wartungspositionssignal die Robotersteuerung oder die SPS zu einer Sperrung geführt hat, kann die Sicherheitssteuerung (z.B. bei kleineren, aber außerhalb einer Toleranz liegenden Abweichungen) den Roboter für eine weitere Bewegung sperren.

Falls eine sicherheitsrelevante Abweichung auftritt, sendet die Sicherheitssteuerung hierzu ein Stoppsignal 132 an die Robotersteuerung 110. Eine sicherheitsrelevante Abweichung kann typischerweise dann angenommen werden, wenn die von der Sicherheitssteuerung gezählte Umdrehungszahl um mindestens eine Umdrehung von der der wirklichen Position entsprechenden Umdrehungszahl abweicht. Da die Sicherheitssteuerung die Messdaten motorseitig an dem Getriebe aufnimmt, kann in Abhängigkeit von der Getriebeübersetzung der Toleranzwert auch ein Vielfaches einer Umdrehung (z.B. zwei, drei oder vier Umdrehung) oder ein Bruchteil einer Umdrehung sein. Ein Vergleich der Umdrehungszahlen wird dabei - in Abhängigkeit der Form der Sicherheitssteuerung - für jede Achse des Roboters getrennt durchgeführt.

Für den Fall, dass eine Abweichung der Sicherhertssteuerung lediglich im Rahmen einer vorgegebenen Toleranz vorliegt, kann die Sicherheitssteuerung eine Freigabe an die Robotersteuerung 110 senden. Diese Freigabe gibt dann das Signal für die Fortführung der Robotersteuerung. Gemäß einer Ausführungsform ist eine praktikable Toleranz ein maximaler Unterschied zwischen der tatsächlichen Position, die durch die tatsächliche Position des Roboterarms in der Wartungsstation 120 vorgegeben ist, und einer ermittelten, insbesondere berechneten Position, die durch die Sicherheitssteuerung 130 basierend auf dem Drehgebersignal erwartet wird, weniger als eine Motorumdrehung im Bezug auf jeweils eine Achse. Im Rahmen der Synchronisation speichert die Sicherheitssteuerung 130 den neuen Wert und kann zum Beispiel auch einen Reset der Laufzeitüberwachung bis zur nächsten Synchronisation durchführen.

Die Umdrehungszählung der Sicherheitssteuerung wird so ohne zusätzlichen Zeitverlust synchronisiert. Eine Synchronisation der Sicherheitsüberwachung kann in eine bestehende Prozedur integriert werden, ohne hierfür zusätzliche Standzeit zu beanspruchen. Im Rahmen einer Wartung in einer Wartungsstation wird ein Signal an eine Sicherheitssteuerung gesendet. Die Sicherheitssteuerung vergleicht daraufhin die derzeitige Roboterposition und die zuletzt gespeicherte Synchronisationsposition. Falls eine Abweichung außerhalb einer vorbestimmten Toleranz vorliegt, kann der Roboter aus Sicherheitsgründen gestoppt werden. Andernfalls kann der normale Betrieb fortgesetzt werden.

Gemäß einer Ausführungsform wird basierend auf der Positionierung des Roboterarms in der Wartungsstation zumindest ein Betriebsignal an die Robotersteuerung oder die Speicherprogrammierbare Steuerung zum Festsetzen des Roboters gesendet, wenn die Wartungsarbeiten starten, durchgeführt werden oder als abgeschlossen gemeldet werden. Ein solches Signal wird gewöhnlich verwendet um die Programmsteuerung des Roboters zu stoppen oder weiterzuführen.

Gemäß einer Ausführungsform wird ein Signal der Wartungsstation, das einen Beginn, ein Andauern oder ein Fertigstellen einer Wartungsarbeit signalisiert, und das an die Robotersteuerung oder die SPS gesendet wird, zusätzlich an die Sicherheitssteuerung gesendet, um eine erforderliche bzw. vorgeschriebene Synchronisation zu initiieren.

Gemäß einer anderen Ausführungsform kann ein Synchronisationssignal auch durch einen zusätzlichen Schalter generiert werden, der z. B. durch die Positionierung des Roboterarms in der Wartungsstation betätigt wird. Gemäß einer weiteren Ausführungsform kann ein solches Signal auch durch eine Lichtschranke oder einen Laservorhang ausgelöst werden. Weiterhin ist es gemäß einer noch weiteren Ausführung möglich, einen Näherungssensor zu verwenden. Entsprechende Schaltvorrichtungen können auch an dem Werkzeug, dem Roboterarm selbst oder anderen Teilen des Roboters angebracht werden. Im Allgemeinen wird ein bestehendes Signal an die Sicherheitssteuerung gesendet oder ein zusätzliches Signal für die Sicherheitssteuerung generiert, wenn der Roboter in die Wartungsposition gebracht ist.

Als Wartungsposition soll im Rahmen der vorliegenden Erfindung eine Position verstanden werden, die der Roboter unabhängig von sicherheitsrelevanten Vorgängen im Bezug auf die Synchronisation der Sicherheitssteuerung in regelmäßigen Abständen und/oder mindestens einmal innerhalb eines vorbestimmten Zeitraumes, insbesondere mindestens einmal innerhalb von 8 Stunden (einer Arbeitsschicht), anfährt. Je nach Sicherheitsanforderung kann das Mindestintervall kleiner oder auch größer gewählt sein.

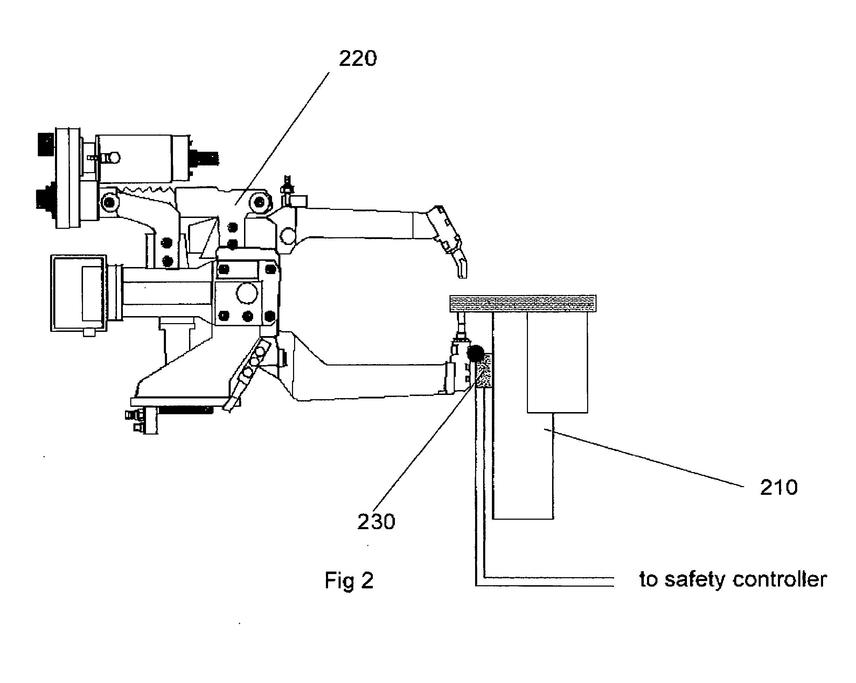

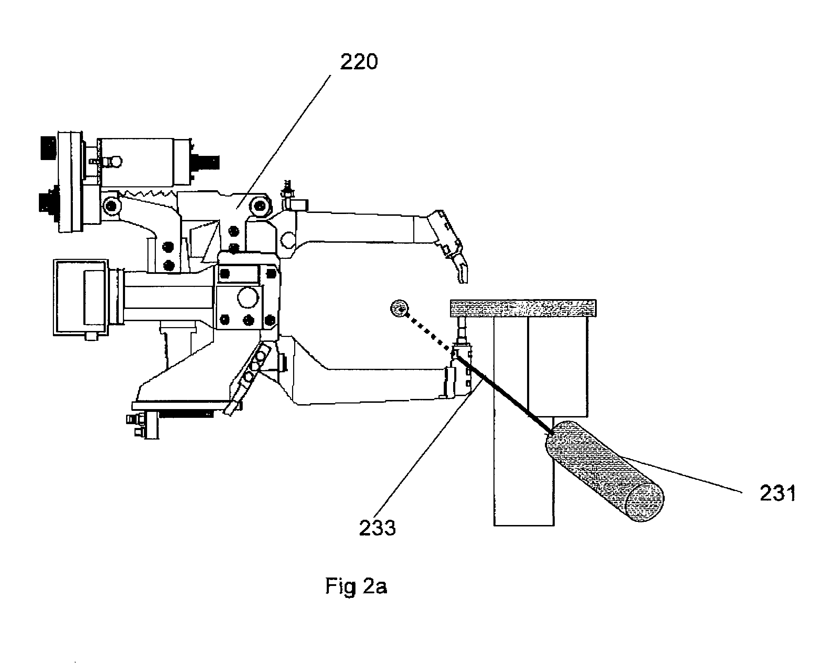

Fig. 2 zeigt eine Ausführungsform, bei der ein Roboterwerkzeug 220 in einer Wartungsposition an einer Werkzeug-Wartungsstation 210 positioniert ist. Das Roboterwerkzeug 220 löst in dieser Position den Schalter 230 aus. Der Schalter 230 sendet durch das betätigen mit dem Werkzeug 220 ein Signal an die Sicherheitssteuerung. Dieses Synchronisationssignal veranlasst eine Synchronisation der Sicherheitssteuerung, die für den Betrieb der Anlage erforderlich ist.

Gemäß einer weiteren Ausführungsform kann der Schalter 230 auch durch andere Teile des Roboters als das Werkzeug 220 ausgelöst werden. Dies kann im Beispiel ein Teil des Roboterarms oder eine Halterung für das Werkzeug sein.

Weiterhin ist es gemäß einer anderen Ausführungsform möglich, dass der Schalter 230 entweder durch den direkten Kontakt mit dem Roboterarm aktiviert wird oder dass es sich um einen Näherungssensor handelt.

Gemäß einer weiteren, in Fig. 2a dargestellten Ausführungsform befindet sich das Werkzeug 220 in einer Werkzeug-Wartungsstation 210. In dieser Position wird ein Lichtstrahl 233 durch das Roboterwerkzeug 220 unterbrochen, was durch die gestrichelte Linie angedeutet ist. Durch die Unterbrechung des Lichtstrahls wird ein Signal an die Sicherheitssteuerung zur Synchronisation generiert.

Gemäß einer Ausführungsform wird der Lichtstrahl 233 durch eine Lichtschranke 231 gebildet. Gemäß einer weiteren Ausführungsform kann der Lichtstrahl 233 auch Teil eines Laservorhangs sein. Gemäß weiteren Ausführungsformen, kann der Lichtstrahl auch durch eine laserbasierte Entfernungsmessung (Laufzeit oder Triangulation) gegeben sein.

Gemäß einer weiteren Ausführungsform kann der Lichtstrahl 233, der zum Beispiel durch einen Laserstrahl gegeben sein kann, auch durch andere Teile des Roboters als das Werkzeug 220 geblockt werden. Dies kann im Beispiel ein Teil des Roboterarms oder eine Halterung für das Werkzeug sein.

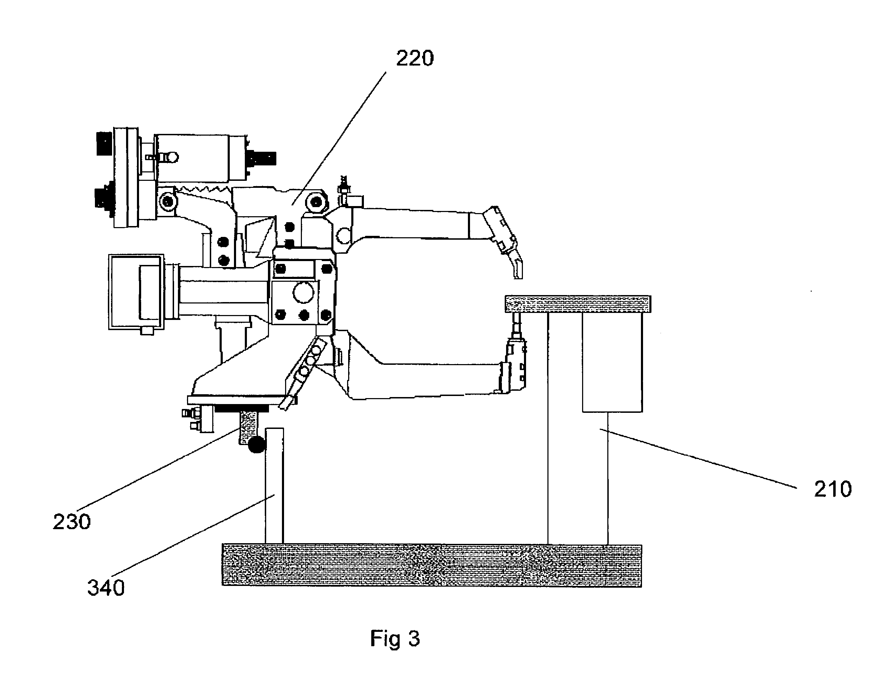

Fig. 3 zeigt eine Ausführungsform bei der ein Schalter 230 oder Taster oder ein Näherungssensor 230 an einem Werkzeug 220 angebracht ist. Das Werkzeug 220 befindet sich in einer Wartungsposition an der Werkzeug-Wartungsstation 210. Eine Betätigungsvorrichtung 340, zum Beispiel eine Platte, ein Stift oder ein ähnliches Teil ist nahe der Wartungsstation oder an der Wartungsstation so positioniert, dass die Betätigungsvorrichtung 340 den Schalter 230 aktiviert wenn das Werkzeug 220 in der Wartungsposition ist.

Gemäß einer weiteren Ausführungsform kann der Schalter 230 auch an anderen Teilen des Roboters als das Werkzeug 220 montiert sein. Dies kann im Beispiel ein Teil des Roboterarms oder eine Halterung für das Werkzeug sein.

Weiterhin ist es gemäß einer anderen Ausführungsform möglich, dass der Schalter 230 entweder durch den direkten Kontakt mit der Betätigungsvorrichtung 340 aktiviert wird oder dass es sich um einen Näherungssensor handelt.

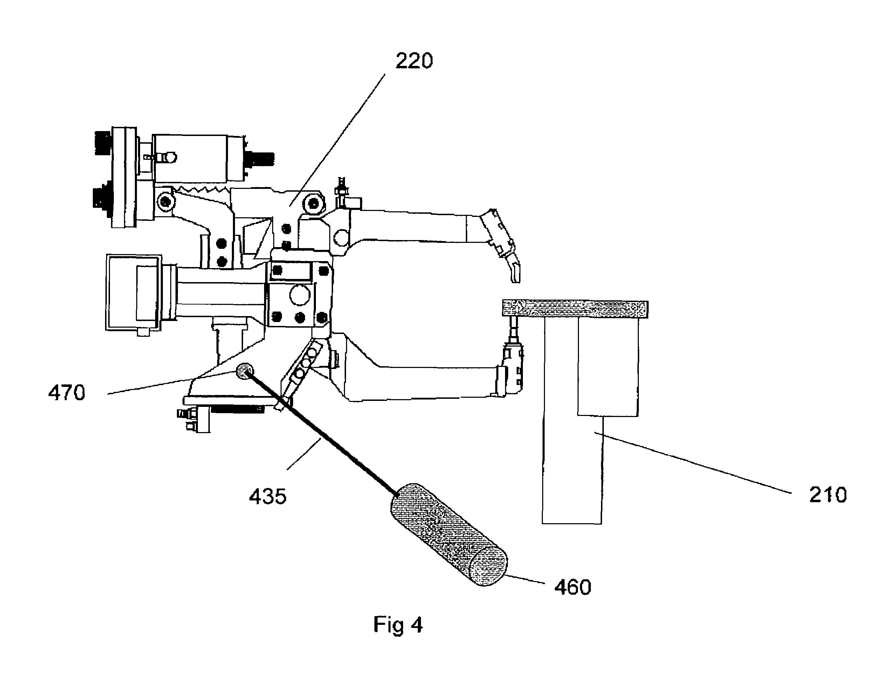

Gemäß einer in Fig. 4 dargestellten Ausführungsform kann ein Synchronisationssignal auch durch einen Detektor für ein Lichtsignal erfolgen. In Fig. 4 befindet sich das Werkzeug 220 in der Wartungsposition im Bezug auf die Werkzeug-Wartungsstation 210. Wenn das Werkzeug, das an einem Roboterarm montiert ist, in einer vorbestimmten Position ist, trifft ein Lichtstrahl, zum Beispiel ein Laserstrahl 435, der von einem Emitter 470 ausgesendet wird, auf eine Detektionseinheit 460. Der Ermittler 470 kann zum Beispiel eine Laserdiode sein. Der Laserstrahl 435 trifft den Lichtempfänger 460, so dass dieser ein Signal empfängt, aktiviert wird und ein Synchronisationssignal aussenden kann.

Gemäß einer weiteren Ausführungsform kann ein Empfänger für einen Lichtstrahl, zum Beispiel einen Laserstrahl, auch an dem Werkzeug 220 angebracht sind sein, während ein Lichtstrahl-Emitter nahe bei der Wartungsstation oder an der Wartungsstation derart angebracht ist, dass der Lichtstrahl den Lichtempfänger auf dem Werkzeug 220 trifft, wenn das Werkzeug in der vorbestimmten Position ist.

Gemäß den oben beschriebenen Ausführungsformen wird ein Synchronisationssignal von einer mit der Wartungsstation in Zusammenhang stehenden Einrichtung generiert und an die Sicherheitssteuerung übertragen. Diese Übertragung kann kabelgebunden stattfinden. Gemäß weiteren Ausführungsformen kann die Übertragung auch drahtlos stattfinden.

Weiterhin beziehen sich die oben beschriebenen Ausführungsformen auf Synchronisationssignale, die entweder von der Wartungsstation selbst oder von zusätzlichen Schaltern, die aktiviert werden, wenn sich das Werkzeug in der Wartungsposition befindet, übertragen werden. Dabei wurden in den oben beschriebenen Ausführungsformen Schalter oder Aktivierungsvorrichtungen für Schalter, die an dem Werkzeug montiert sind beschrieben. Gemäß anderer Ausführungsformen können die Schalter oder Sensoren oder die Aktivierungseinheiten für Schalter und Sensoren auch an dem Roboterarm angebracht sein. Typischerweise wird hierzu eine Position an einem Roboterarm verwendet, die geeignet ist eine Synchronisation aller Achsen des Roboters zu ermöglichen. Gemäß weiterer Ausführungsformen können jedoch auch Schalter und Sensoren oder Betätigungsvorrichtungen für Schaltung und Sensoren derart angeordnet sein, dass einzelne Achsen oder alle Achsen des Roboters getrennt synchronisiert werden können.

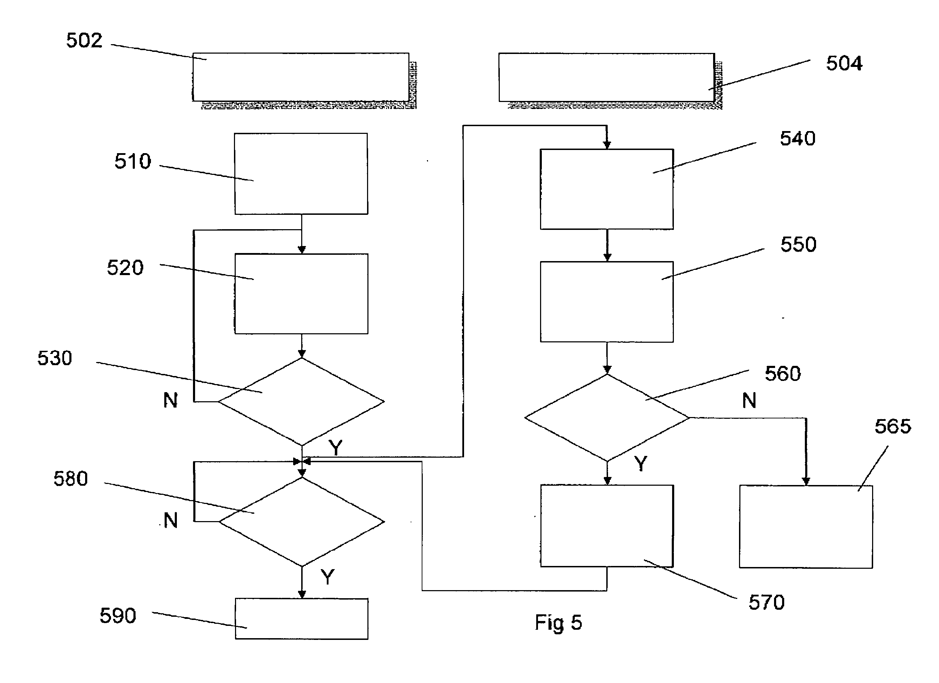

Fig. 5 zeigt eine Ausführungsform eines Verfahrens zur Abwicklung der Synchronisation der Sicherheitssteuerung. In Fig. 5 ist das Verfahren in eine Robotersteuerungsseite/SPS-Seite 502 und eine Sicherheitssteuerungsseite 504 aufgeteilt. Eine Speicherprogrammierbare Steuerung (SPS/PLC) oder eine Robotersteuerungen gibt in Schritt 510 ein Steuersignal, das Werkzeug in die Wartungspositionen zu bewegen. In Schritt 520 wird die Wartung an dem Werkzeug durchgeführt. Das Verfahren prüft in Schritt 530 ob ein positives Signal im Bezug auf die Wartung empfangen wird. Falls dies nicht der Fall ist springt der Prozess zurück zu Schritt 520. Bei einem positiven Signal im Bezug auf die Wartungsposition wird ein Synchronisationssignal an die Sicherheitssteuerung gesendet, die in Schritt 540 die Roboterposition ausliest. In Schritt 550 wird die Roboterposition mit der gespeicherten Position verglichen. Ergibt eine Toleranzüberprüfung in Schritt 560 eine Abweichung außerhalb einer vorgegebenen Toleranz, wird der Ablauf in Schritt 565 mit einer Fehlermeldung beendet und der weitere Betrieb des Roboters gestoppt. Bei einem Positionsvergleich innerhalb einer vorgegebenen Toleranz wird das Verfahren in Schritt 570 fortgesetzt, indem ein Synchronisations-Antwortsignal gesendet wird, das eine erfolgreiche Synchronisation anzeigt. Die Robotersteuerung oder die SPS überprüft in Schritt 580 ob ein Signal für die erfolgreiche Synchronisation empfangen wurde, und setzt eine weitere Bewegung des Roboters in Schritt 590 nur nach Erhalt eines positiven Signals fort.

Durch die zuvor beschriebenen Ausführungsformen wird die Sicherheitssteuerung ohne zusätzlichen Zeitverlust synchronisiert. Eine Synchronisation der Sicherheitsüberwachung kann in eine bestehende Prozedur integriert werden, ohne hierfür zusätzliche Standzeit zu beanspruchen. Im Rahmen einer Wartung in einer Wartungsstation wird ein zusätzliches Signal and die Sicherheitssteuerung übertragen. Eine den Sicherheitsbestimmungen entsprechende Synchronisation der Sicherheitssteuerung kann ohne zusätzlichen Zeitaufwand realisiert werden. Hierdurch wird die Produktivität gesteigert und die Akzeptanz der Sicherheitssysteme erhöht.

## Patentansprüche

1. System zur Steuerung einer Bewegungsvorrichtung, beinhaltend:
eine Bewegungsvorrichtung mit einem an der Bewegungsvorrichtung zur Verfügung gestellten Werkzeug (220);
eine Bewegungsvorrichtungssteuerung (100, 110);
eine Sicherheitssteuerung (130);
eine Werkzeug-Wartungsstation (120, 210); und
eine Beviregungserkennungseinheit für die Positionsbestimmung der Bewegungsvorrichtung in der Sicherheitssteuerung;
**dadurch gekennzeichnet, dass** das System weiterhin beinhaltet:
ein Positionsdetektionsmodul zur Generierung eines Signals korrespondierend zu einer Positionierung des Werkzeugs in der Werkzeug-Wartungsstation, das mit einer Übertragungseinheit für das Signal (140) an die Sicherheitssteuerung zur Verfügung gestellt ist.

2. System zur Steuerung einer Bewegungsvorrichtung gemäß Anspruch 1, **dadurch gekennzeichnet, dass** die Übertragungseinheit des Positionsdetektionsmoduls geeignet ist, das Signal aus einem Wartungssignal für die Bewegungsvorrichtung zu generieren.

3. System zur Steuerung einer Bewegungsvorrichtung gemäß Anspruch 1 oder 2, **dadurch gekennzeichnet, dass** das Positionsdetektionsmodul eine erste und zweite Positionsdetektionsmodul-Komponente aufweist, wobei die erste Positionsdetektionsmodul-Komponente ein Positionsdetektor (230; 231; 460) ist und die zweite Positionsdetektionsmodul-Komponente ein den Positionsdetektor auslösendes Element (220; 340; 470) ist.

4. System zur Steuerung einer Bewegungsvorrichtung gemäß Anspruch 3, **dadurch gekennzeichnet, dass** der Positionsdetektor ortsfest im Bezug auf die Werkzeug-Wartungsstation oder an der Werkzeug-Wartungsstation zur Verfügung gestellt ist, und wobei das den Positionsdetektor auslösende Element an der Bewegungsvorrichtung oder an dem Werkzeug zur Verfügung gestellt ist.

5. System zur Steuerung einer Bewegungsvorrichtung gemäß Anspruch 3, **dadurch gekennzeichnet, dass** der Positionsdetektor (230; 231; 460) an der Bewegungsvorrichtung oder an dem Werkzeug (220) zur Verfügung gestellt ist, und wobei das den Positionsdetektor auslösende Element (220; 340; 470) ortsfest im Bezug auf die Werkzeug-Wartungsstation oder an der Werkzeug-Wartungsstation zur Verfügung gestellt ist.

6. System zur Steuerung einer Bewegungsvorrichtung gemäß einem der Ansprüche 3 bis 5, **dadurch gekennzeichnet, dass** der Positionsdetektor ein Element aus der Gruppe ist, die aus folgenden Elementen besteht: ein Schalter, ein Näherungssensor, eine Lichtschranke, ein Entfernungsmesser, und ein Licht-Detektor.

7. System zur Steuerung einer Bewegungsvorrichtung gemäß einem der Ansprüche 1 bis 6, **dadurch gekennzeichnet, dass** die Übertragungseinheit das Signal mittels eines Kabels an die Sicherheitssteuerung überträgt.

8. System zur Steuerung einer Bewegungsvorrichtung gemäß einem der Ansprüche 1 bis 7, **dadurch gekennzeichnet, dass** die Übertragungseinheit das Signal drahtlos an die Sicherheitssteuerung (130) überträgt.

9. System zur Steuerung einer Bewegungsvorrichtung gemäß einem der Ansprüche 1 bis 8, **dadurch gekennzeichnet, dass** die Bewegungsvorrichtung ein Roboter ist.

10. Verfahren zur Steuerung einer Bewegungsvorrichtung mit einer Sicherheitssteuerung, beinhaltend:
Ein Bewegen der Bewegungsvorrichtung zu einer Wartungsstation (120; 210) für ein an der Bewegungsvorrichtung befestigtes Werkzeug (220) in eine Wartungsposition;
Ein Übertragen eines Wartungssignals (122) an eine Steuerkomponente der Bewegungsvorrichtung innerhalb eines Zeitraums vom Einnehmen der Wartungsposition bis zum Verlassen der Wartungsposition;
Ein Übertragen eines Synchronisationssignals (140) für eine Sicherheitssteuerung innerhalb des Zeitraums vom Einnehmen der Wartungsposition bis zum Verlassen der Wartungsposition;
Ein Synchronisieren der Sicherheitssteuerung;
Ein Bewegen der Bewegungsvorrichtung von der Wartungsstation nach einem Signal für eine erfolgreiche Synchronisierung.

11. Verfahren zur Steuerung einer Bewegungsvorrichtung mit einer Sicherheitssteuerung (130) gemäß Anspruch 10, **dadurch gekennzeichnet, dass** beim Synchronisieren der Sicherheitssteuerung die Sicherheitssteuerung die von der Sicherheitssteuerung ermittelte, insbesondere berechnete Umdrehungszahl oder Position einer Achse mit einer gespeicherten Umdrehungszahl oder Position der Achse vergleicht und eine Abweichung im Bezug auf eine vorgegebene Toleranz bewertet.

12. Verfahren zur Steuerung einer Bewegungsvorrichtung mit einer Sicherheitssteuerung gemäß einem der Ansprüche 10 bis 11, **dadurch gekennzeichnet, dass** das an der Bewegungsvorrichtung befestigte Werkzeug (220) innerhalb des Zeitraums vom Einnehmen der Wartungsposition bis zum Verlassen der Wartungsposition gewartet wird.

13. Verfahren zur Steuerung einer Bewegungsvorrichtung mit einer Sicherheitssteuerung gemäß einem der Ansprüche 10 bis 12, **dadurch gekennzeichnet, dass** das Synchronisationssignal aus dem Wartungssignal generiert wird.

14. Verfahren zur Steuerung einer Bewegungsvorrichtung mit einer Sicherheitssteuerung gemäß einem der Ansprüche 10 bis 13, **dadurch gekennzeichnet, dass** das Synchronisationssignal durch einen Detektionsmechanismus generiert wird, der in der Wartungsposition aktiviert wird.

15. Verfahren zur Steuerung einer Bewegungsvorrichtung mit einer Sicherheitssteuerung gemäß Anspruch 14, **dadurch gekennzeichnet, dass** der Detektionsmechanismus durch zumindest ein Element aus der Gruppe bestehend aus dem Werkzeug, der Bewegungsvorrichtung, einer Wartungsstationskomponente und einer Lichtquelle aktiviert wird.

16. Verfahren zur Steuerung einer Bewegungsvorrichtung mit einer Sicherheitssteuerung gemäß einem der Ansprüche 10 bis 15, **dadurch gekennzeichnet, dass** eine Zeit für einen Zyklus der Bewegungsvorrichtung inklusive Wartung des an der Bewegungsvorrichtung befestigten Werkzeugs nicht kleiner ist als eine Zeit für einen Zyklus der Bewegungsvorrichtung inklusive Wartung des an der Bewegungsvorrichtung befestigten Werkzeugs und der Synchronisation der Sicherheitssteuerung.

17. Verfahren zur Steuerung einer Bewegungsvorrichtung mit einer Sicherheitssteuerung gemäß einem der Ansprüche 10 bis 16, weiter beinhaltend: Ein Überprüfen eines Positionswertes der Bewegungsvorrichtungssteuerung durch die Sicherheitssteuerung.
